# FASCICULE DE BREVET EUROPEEN

(11) **EP 1 743 061 B1**
(45) Date de publication et mention de la délivrance du brevet: **11.08.2010**
(21) Numéro de dépôt: 05760007.4
(22) Date de dépôt: 20.04.2005
(51) Int. Cl.: D04H 13/00, B32B 5/26

(54) **PROCEDE DE FABRICATION DE NAPPE FIBREUSE BIDIMENSIONNELLE HELICOÏDALE**
VERFAHREN ZUR HERSTELLUNG EINES ZWEIDIMENSIONALEN SPIRALFÖRMIGEN FASERVLIESES
METHOD FOR MAKING A TWO-DIMENSIONAL HELICAL FIBRE WEB

(30) Priorité: 23.04.2004 FR 0404310
(43) Date de publication de la demande: 17.01.2007
(73) Titulaire: MESSIER-BUGATTI, 78140 Vélizy Villacoublay (FR)
(72) Inventeur: DELECROIX, Vincent, F-69390 Vernaison (FR)
(74) Mandataire: Joly, Jean-Jacques
(86) Numéro de dépôt international: PCT/FR2005/000973
(87) Numéro de publication internationale: WO 2005/111292

(56) Documents cités:
- EP-A- 0 683 261
- FR-A- 2 490 687
- FR-A- 2 839 985
- US-A- 5 242 745
- US-A- 6 009 605
- US-A- 6 105 223

## Description

### Arrière-plan de l'invention

L'invention concerne la fabrication d'une nappe fibreuse bidimensionnelle hélicoïdale.

Un domaine particulier d'application de l'invention est la fabrication de nappes fibreuses hélicoïdales destinées à la réalisation de structures fibreuses tridimensionnelles annulaires, telles que des structures fibreuses de renfort pour des pièces annulaires en matériau composite, notamment des disques de frein.

Des disques de frein en matériau composite, en particulier en matériau composite à renfort en fibres de carbone et matrice carbone (composites carbone/carbone ou C/C) ou à renfort en fibres de carbone et matrice au moins en partie céramique (composites carbone/céramique, ou C/C-céramique), sont bien connus. Leur fabrication comprend la réalisation d'une préforme fibreuse annulaire et la densification de celle-ci par une matrice, la densification étant réalisée par voie liquide (imprégnation par une résine précurseur de la matrice et pyrolyse de la résine) ou par voie gazeuse (infiltration chimique en phase vapeur).

La préforme fibreuse est réalisée habituellement par empilement de strates fibreuses et liaison des strates entre elles, typiquement par aiguilletage.

La forme annulaire de la préforme peut être obtenue par découpe d'un bloc formé de strates fibreuses empilées et liées entre elles, ou par empilement de strates fibreuses de forme annulaire découpées dans des textures bidimensionnelles (tissus, nappes de fibres unidirectionnelles ou multidirectionnelles, feutres, ...). Il en résulte une chute assez importante de matière. Cette chute peut être réduite en formant des strates annulaires par juxtaposition de secteurs d'anneau découpés dans une texture bidimensionnelle, mais au prix d'une mise en oeuvre plus complexe. On pourra se référer notamment aux documents US 4 790 052, US 5 792 715 et EP 0 232 059.

Des procédés ont été proposés permettant d'obtenir une préforme annulaire ayant la forme désirée pratiquement sans chute de matière, ces procédés consistant à enrouler une texture fibreuse hélicoïdale en spires superposées à plat, lesquelles spires sont liées entre elles, notamment par aiguilletage. De tels procédés utilisant une nappe hélicoïdale déformable ou des tresses hélicoïdales aplaties sont décrits notamment dans les documents US 6 009 605 et US 5 662 855. On peut se référer aussi aux documents US 6 363 593 et US 6 367 130 qui concernent une installation pour réaliser de telles préformes fibreuses annulaires à partir de textures bidimensionnelles hélicoïdales.

Ces procédés d'obtention de préformes fibreuses annulaires requièrent l'élaboration de nappes tissées ou tresses hélicoïdales par des procédés qui sont d'un coût relativement élevé.

Il a bien été proposé dans le document WO 98/49 382 de réaliser une préforme fibreuse annulaire épaisse directement à partir de fibres libres sans passer par une étape de fabrication de textures fibreuses, notamment en nappant un ensemble de fibres libres en direction radiale sur un lit de fibres libres désordonnées amené en direction circonférentielle, l'ensemble étant lié par aiguilletage. Outre que la description est quasi muette sur la façon dont le lit de fibres désordonnées est réalisé et sur la façon dont les fibres libres radiales sont déposées, il apparaît immédiatement que l'obtention d'une préforme fibreuse ne présentant pas de grande inhomogénéité d'épaisseur et de densité de fibres est pratiquement impossible.

### Objet et résumé de l'invention

La présente invention a pour but de remédier aux inconvénients des procédés de l'art antérieur en proposant un procédé de fabrication d'une texture fibreuse hélicoïdale permettant notamment de réaliser des structures fibreuses annulaires épaisses de façon simplifiée et à un coût relativement faible, tout en minimisant les chutes de matière et les hétérogénéités de densité et d'épaisseur.

Ce but est atteint grâce à un procédé comportant les étapes qui consistent à :
- amener au moins une nappe fibreuse transversale et la napper en la guidant suivant une direction sensiblement radiale le long d'un trajet alternativement dans un sens et dans l'autre entre des bords circonférentiels externe et interne de la nappe, avec retournement de la nappe transversale à chaque extrémité de son trajet, la largeur de la nappe transversale étant diminuée entre le bord circonférentiel externe et le bord circonférentiel interne,
- maintenir la nappe transversale au fur et à mesure de son nappage,
- appeler une pluralité de fils ou câbles sensiblement parallèles entre eux pour former une nappe longitudinale hélicoïdale, la densité surfacique de la nappe longitudinale étant décroissante entre son bord longitudinal externe et son bord longitudinal interne,
- superposer les nappes transversale et longitudinale et les avancer en continu en rotation à plat,
- assembler la nappe transversale nappée et la nappe longitudinale pour former une nappe bidimensionnelle hélicoïdales, et
- évacuer la nappe bidimensionnelle hélicoïdale ainsi formée.

Le procédé selon l'invention est remarquable en ce qu'il permet, par une technique de type nappage, d'obtenir une nappe bidimensionnelle hélicoïdale. Le coût de fabrication est inférieur à celui des techniques de tissage et de tressage. La nappe hélicoïdale obtenue peut ensuite être utilisée pour obtenir directement une structure fibreuse annulaire par superposition de spires à plat. L'utilisation d'une nappe permet alors de réduire les irrégularités d'épaisseur dues aux entrecroisements de fils en comparaison avec des textures tissées ou tressées.

De préférence, la nappe longitudinale est amenée sur la nappe transversale nappée immédiatement avant assemblage des deux nappes, le maintien des positions des fils de la nappe longitudinale hélicoïdale par rapport à la nappe transversale nappée étant ainsi assuré par l'assemblage des deux nappes.

La nappe transversale peut être formée d'une pluralité de fils ou câbles ou d'au moins un câble étalé.

Avantageusement, lors de son nappage, la nappe transversale est guidée par passage sur un guide de manière à favoriser un resserrement de la nappe lors du déplacement du guide du bord circonférentiel externe vers le bord circonférentiel interne de la nappe, et inversement.

Le guide comprend avantageusement deux barreaux incurvés sur lesquels la nappe transversale s'appuie alternativement lorsque le guide est déplacé dans un sens et dans l'autre entre les bords externe et interne de la nappe.

Lorsque la nappe transversale est formée d'une pluralité de fils ou câbles, chaque fil ou câble est en outre de préférence guidé entre des éléments de guidage fixes s'étendant sensiblement radialement entre les bords circonférentiels externe et interne de la nappe.

Lorsqu'elle est formée d'au moins un câble étalé, la nappe transversale est en outre de préférence guidée entre deux éléments de guidage fixes s'étendant sensiblement radialement entre les bords circonférentiels externe et interne de la nappe.

En variante, lorsque la nappe transversale est formée d'une pluralité de fils ou câbles, chaque fil ou câble peut être guidé par passage dans un guide-fil respectif déplacé entre les bords circonférentiels externe et interne.

Avantageusement, la nappe transversale est maintenue après nappage, au niveau de ses retournements, sur des supports situés le long des bords circonférentiels externe et interne de la nappe, lesquels supports étant déplacés en synchronisme avec l'avance des nappes transversale nappée et longitudinale.

Le maintien peut être assuré notamment par aspiration sur lesdits supports ou par passage autour de picots portés par lesdits supports.

La variation de la densité surfacique de la nappe longitudinale hélicoïdale peut être obtenue en utilisant des fils ou câbles de titres différents et/ou en faisant varier l'espacement entre les fils ou câbles, tandis que l'appel des fils ou câbles longitudinaux peut être réalisé en faisant passer ceux-ci dans une presse comprenant deux rouleaux coniques appliqués l'un vers l'autre.

Différents moyens d'assemblage des nappes longitudinale et transversale peuvent être utilisés, tels que l'aiguilletage, la couture avec un fil de liage, ou l'interposition de fils thermofusibles.

Les nappes transversale et longitudinale peuvent être amenées sur un plateau support annulaire fixe, lequel a avantageusement une forme de secteur d'anneau avec une extrémité aval située en aval d'une zone d'assemblage des nappes longitudinale et transversale, dans le sens d'avance. La nappe bidimensionnelle hélicoïdale est alors évacuée à la sortie du plateau support annulaire située à l'extrémité aval de celui-ci. Avantageusement, la nappe bidimensionnelle hélicoïdale ainsi évacuée est enroulée en hélice en spires superposées à plat dans un pot de stockage annulaire rotatif situé sous le plateau support annulaire et ayant sensiblement même axe que celui-ci.

En variante, les nappes transversale nappée et longitudinale peuvent être amenées sur un support annulaire rotatif. L'évacuation de la nappe bidimensionnelle hélicoïdale peut alors être réalisée latéralement par rapport au plateau support annulaire.

L'invention a aussi pour objet de fournir une installation permettant la mise en oeuvre du procédé défini ci-avant.

Selon l'invention, une telle installation comporte :
- un plateau support annulaire,
- un dispositif d'amenée et de nappage transversal pour déplacer une nappe fibreuse transversale suivant un trajet alternatif d'un côté à l'autre du plateau support annulaire avec retournement de la nappe transversale à chaque extrémité de ce trajet et en guidant la nappe en direction sensiblement radiale,
- des moyens de maintien de la nappe transversale nappée,
- un dispositif d'appel d'un ensemble de fils ou câbles pour former une nappe longitudinale hélicoïdale et l'amener sur le plateau support annulaire,
- un dispositif d'assemblage de la nappe transversale nappée et de la nappe longitudinale pour former une nappe bidimensionnelle hélicoïdale,
- des moyens d'avance en continu de la nappe transversale nappée et de la nappe longitudinale en rotation à plat sur le plateau support annulaire, et
- des moyens d'évacuation de la nappe bidimensionnelle hélicoïdale après assemblage des nappes longitudinale et transversale.

Avantageusement, le dispositif d'amenée et de nappage de la nappe transversale comprend un guide sur lequel passe la nappe transversale et des moyens d'entraînement du guide en déplacement le long d'un trajet alternatif sensiblement radial d'un côté à l'autre du plateau support annulaire, le guide étant réalisé de manière à favoriser un resserrement de la nappe transversale lors du déplacement du guide du côté extérieur du plateau annulaire vers le côté intérieur, et inversement. Avantageusement encore, le guide comprend deux barreaux incurvés sur lesquels la nappe transversale s'appuie alternativement lorsque le guide est déplacé dans un sens et dans l'autre entre les côtés extérieur et intérieur du plateau annulaire.

Dans le cas d'une nappe transversale formée d'une pluralité de fils ou câbles transversaux, le dispositif d'amenée et de nappage comprend de préférence en outre une pluralité d'éléments de guidage fixes disposés radialement entre les côtés extérieur et intérieur du plateau annulaire et coopérant avec les fils ou câbles transversaux pour guider chacun de ceux-ci sur son trajet entre le côté extérieur et le côté intérieur du plateau support annulaire. Par contre, dans le cas d'une nappe transversale formée d'au moins un câble étalé, le dispositif d'amenée et de nappage comprend de préférence en outre deux éléments de guidage fixes disposés radialement entre les côtés extérieur et intérieur du plateau support annulaire et entre lesquels la nappe transversale est guidée sur son trajet entre le côté extérieur et le côté intérieur du plateau support annulaire.

En variante, dans le cas d'une nappe transversale formée d'une pluralité de fils ou câbles transversaux, le dispositif d'amenée et de nappage peut comprendre une pluralité de guide-fil chacun associé à un fil ou câble transversal respectif, et des moyens de déplacement alternatif des guide-fil le long des trajets sensiblement radiaux entre les côtés extérieur et intérieur du plateau support annulaire.

Avantageusement, les moyens de maintien de la nappe transversale nappée comportent des supports en forme de bandes ou couronnes situés de part et d'autre du plateau support annulaire, des moyens de retenue de la nappe transversale au niveau de ses retournements sur lesdits supports, et des moyens d'entraînement desdits supports en synchronisme avec les moyens d'avance.

Dans un mode de réalisation, les moyens de retenue de la nappe transversale nappée comportent une chambre de dépression associée aux supports en forme de bandes ou couronnes afin de maintenir la nappe transversale sur ceux-ci par aspiration.

Dans un autre mode de réalisation, les moyens de retenue comportent des picots portés par des supports en forme de bande, de manière à réaliser les retournements de la nappe transversale autour des picots.

Le dispositif d'appel de la nappe longitudinale peut comprendre une presse formée de deux rouleaux coniques entre lesquels passent les fils ou câbles formant la nappe longitudinale.

Le dispositif d'assemblage des nappes longitudinale et transversale nappée peut être un dispositif d'aiguilletage qui comprend au moins une tête d'aiguilletage et s'étend sur un secteur d'anneau au-dessus du plateau support annulaire, celui-ci étant muni de perforations en regard des aiguilles du dispositif d'aiguilletage.

En variante, le dispositif d'assemblage des nappes longitudinale et transversale nappée peut comprendre au moins une tête de couture pour assembler les nappes au moyen d'un fil de liage.

Les moyens d'avance peuvent comporter des moyens d'entraînement de la nappe bidimensionnelle hélicoïdale en aval du dispositif d'assemblage, dans le sens de l'avance.

Le plateau support annulaire peut être fixe et s'étendre sur un secteur d'anneau ayant une extrémité aval, dans le sens de l'avance des nappes longitudinale et transversale nappée, située en aval du dispositif d'assemblage des nappes. Les moyens d'évacuation de la nappe bidimensionnelle hélicoïdale peuvent alors comporter un pot annulaire situé sous le plateau support annulaire et de même axe que celui-ci, et des moyens d'entraînement du pot annulaire en synchronisme avec les moyens d'avance, pour recueillir et enrouler en continu dans le pot la nappe bidimensionnelle hélicoïdale sortant du plateau support annulaire à l'extrémité aval de celui-ci.

Le plateau support annulaire peut aussi être rotatif et peut alors présenter une partie supérieure formant brosse à poils rigides.

### Brève description des dessins

D'autres particularités et avantages du procédé selon l'invention ressortiront à la lecture de la description faite ci-après, à titre indicatif mais non limitatif, en référence aux dessins annexés, sur lesquels :
- la figure 1 est une vue générale très schématique en perspective d'une installation permettant la mise en oeuvre d'un procédé selon l'invention ;
- la figure 2 est une vue très schématique de dessus de l'installation de la figure 1 ;
- la figure 3 est une vue plus détaillée partielle en perspective, montrant l'amenée des fils transversaux et le maintien de ceux-ci au niveau des bords de la nappe de fils longitudinaux ;
- la figure 4 est une vue montrant schématiquement les orientations des fils de la nappe transversale après nappage de celle-ci ;
- la figure 5 est une vue partielle de dessus illustrant schématiquement le nappage d'une nappe transversale formée d'un câble étalé sur la nappe de fils longitudinaux ;
- la figure 6 est une vue partielle en perspective plus détaillée montrant le nappage de la nappe transversale de la figure 7 ;
- la figure 7 est une vue partielle plus détaillée en coupe radiale suivant le plan VII de la figure 1 montrant l'amenée de la nappe de fils longitudinaux dans l'installation de la figure 1 ;
- la figure 8 illustre une variante de constitution de la nappe de fils longitudinaux ;
- la figure 9 est une vue partielle en coupe suivant le plan IX de la figure 1 montrant l'assemblage des nappes longitudinale et transversale ;
- la figure 10 est une vue similaire à celle de la figure 5 montrant un autre mode de maintien des fils transversaux au niveau des bords de la nappe de fils longitudinaux ;
- la figure 11 est une vue schématique partielle en perspective montrant l'évacuation de la nappe bidimensionnelle hélicoïdale dans le cas du mode de réalisation de la figure 10 ;
- la figure 12 montre très schématiquement et partiellement une variante du mode de réalisation des figures 10 et 11 ;
- la figure 13 est une vue schématique de dessus d'un autre mode de réalisation d'une installation permettant la mise en oeuvre d'un procédé selon l'invention ;
- la figure 14 est une vue partielle plus détaillée en élévation latérale selon la flèche XIV de la figure 13 ;
- la figure 15 est une vue partielle plus détaillée en coupe suivant le plan XV de la figure 13 montrant le nappage de la nappe de fils transversaux ;
- la figure 16 est une vue de détail montrant le maintien des fils transversaux au niveau des bords de la nappe longitudinale dans l'installation de la figure 13 ;
- la figure 17 est une vue de détail montrant un autre mode de maintien des fils transversaux au niveau des bords de la nappe longitudinale dans l'installation de la figure 13 ; et
- la figure 18 est une vue générale schématique en perspective d'un autre mode de réalisation d'une installation permettant la mise en oeuvre d'un procédé selon l'invention.

### Description détaillée de modes de réalisation

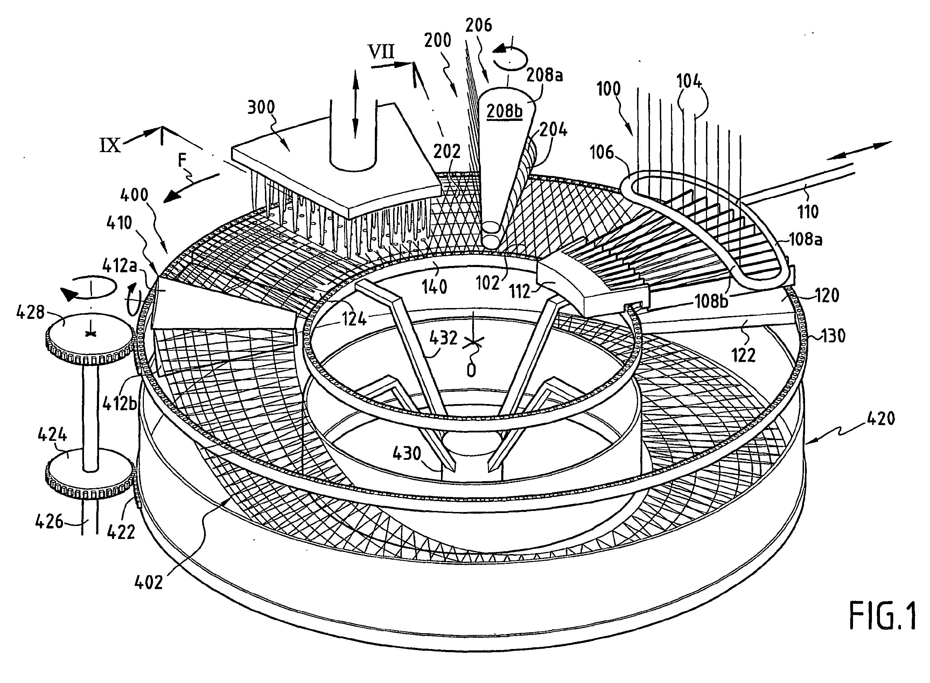

D'une façon générale (figure 1), une installation particulière permettant la mise en oeuvre d'un procédé conforme à l'invention comprend un dispositif 100 de formation d'une nappe transversale nappée 102 sur un plateau support annulaire horizontal fixe 120, un dispositif 200 d'appel et de dépôt d'une nappe hélicoïdale 202, formée de fils ou câbles longitudinaux 204, sur le plateau support 120, un dispositif 300 d'assemblage des nappes transversale nappée 102 et longitudinale 202 sur le plateau 120 et un dispositif 400 d'évacuation, hors du plateau 120, de la nappe hélicoïdale bidimensionnelle annulaire 402 obtenue en sortie du dispositif d'assemblage. La nappe transversale et la nappe longitudinale déposées sur le plateau 120, ainsi que la nappe hélicoïdale bidimensionnelle formée 402 sont déplacées en rotation en continu sur le plateau 120 autour du centre de celui-ci (flèche F). L'entraînement est réalisé par un dispositif d'appel 410 comprenant une paire de rouleaux coniques 412a, 412b, dont l'un au moins est motorisé, situés en aval du dispositif d'assemblage, la nappe hélicoïdale bidimensionnelle étant appelée par passage entre les rouleaux 412a, 412b appliqués l'un vers l'autre.

### Formation de la nappe transversale

La nappe 102 est formée par nappage de fils ou câbles transversaux 104 amenés sur le plateau support 120. Le plateau 120 est en forme de secteur d'anneau de centre O. Il est formé par exemple par une table métallique lisse. Les éléments 104 sont désignés ci-après par fils par souci de simplicité. Les fils 104 sont de préférence de même titre et sont amenés avec un même espacement mutuel.

Les fils 104 sont en une matière choisie en fonction de l'utilisation envisagée de la nappe hélicoïdale bidimensionnelle à réaliser. Dans le cas d'une application à la réalisation de textures de renfort, ou préformes, pour des pièces en matériau composite C/C ou carbone/ céramique ou C/C-céramique, les fils 104 sont des fils de carbone du commerce tels que des fils 12K (12000 filaments), 24K, 50K ou 80K.

Chacun des fils transversaux 104 formant la nappe transversale 102 est tiré d'une bobine particulière portée par un cantre (non représenté). Les fils 104 parviennent sensiblement parallèlement entre eux à un cadre de guidage 106. Les fils 104 sont amenés par exemple sensiblement verticalement au niveau du rayon médian du plateau 120 et sont déviés horizontalement par le cadre 106.

Le cadre 106 est solidaire d'une tige 110 qui est déplacée en direction horizontale radiale dans un sens et dans l'autre sous l'action d'un organe d'entraînement tel qu'un vérin (non représenté). Le cadre 106 est ainsi animé d'un mouvement de translation radial alternatif entre une couronne extérieure 130 et une couronne intérieure 140 qui s'étendent le long des bords externe et interne du plateau support 120 mais en formant des anneaux complets de centre O.

Le cadre 106 est disposé sensiblement horizontalement parallèlement au plateau support 120, et comprend deux côtés opposés formés par des barreaux incurvés 108a 108b. Lorsque le cadre 106 est déplacé radialement vers l'intérieur, c'est-à-dire vers la couronne intérieure 140 (ou le bord interne de la nappe transversale) les fils 104 s'appuient sur le profil convexe du barreau 108a, ce qui favorise un resserrement de la nappe 102. Inversement, lorsque le cadre est déplacé radialement vers l'extérieur, c'est-à-dire vers la couronne extérieure 130 (ou le bord externe de la nappe transversale), les fils 104 s'appuient sur le profil concave du barreau 108b, ce qui favorise un élargissement de la nappe 102. On pourra conférer aux barreaux 108a, 108b des courbures différentes correspondant sensiblement à celles des couronnes 140 et 130, respectivement, ou une même courbure par exemple correspondant à la courbure moyenne entre celles des couronnes 140 et 130.

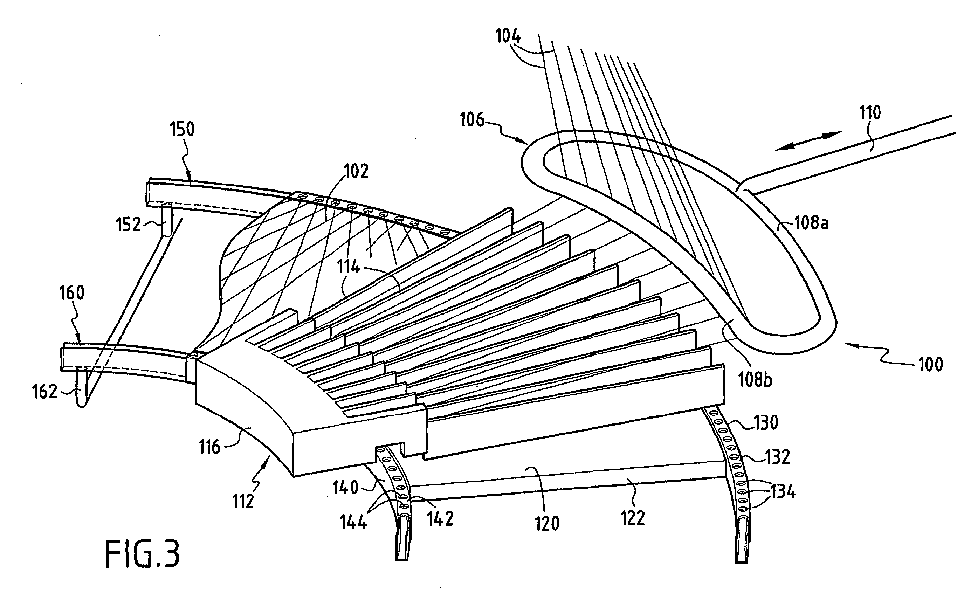

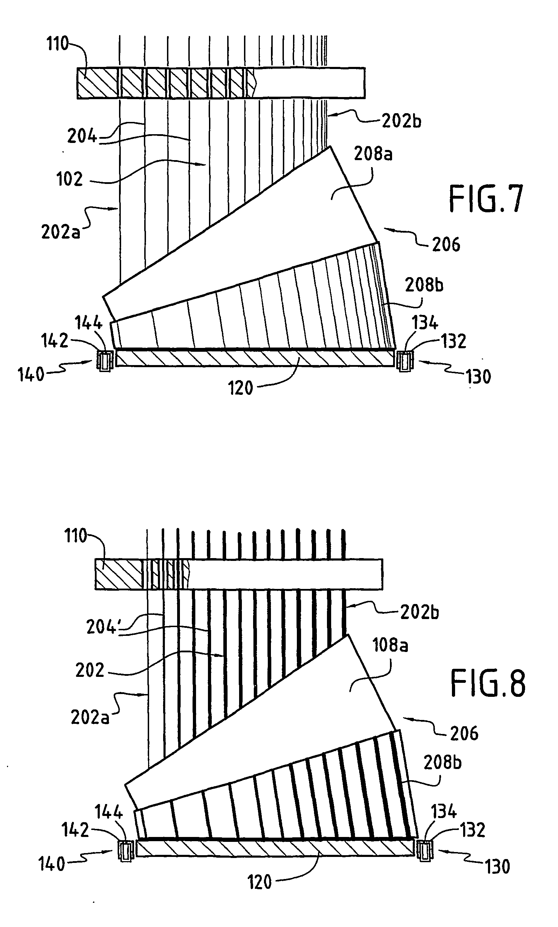

Comme montré notamment sur les figures 3 et 7, la couronne extérieure 130 est formée par un profilé à section en U s'ouvrant vers le bas dont la paroi supérieure, ou base, 132 est munie de perforations 134. De même, la couronne intérieure 140 est formée par un profilé à section en U s'ouvrant vers le bas dont la paroi supérieure ou base 142 est munie de perforations 144. Les couronnes 130 et 140 sont entraînées en rotation en synchronisme avec l'avance de la nappe sur le support 120, comme décrit plus loin. Les surfaces des bases 132, 142 et du plateau support 120 sont sensiblement coplanaires.

Une chambre de dépression fixe 150 (figure 3) de forme annulaire s'étend entre les ailes de la couronne extérieure 130 sur un secteur annulaire s'étendant depuis une extrémité amont située en amont de la zone de nappage des fils transversaux 104 jusqu'à une extrémité aval située en aval de l'extrémité amont de la zone d'assemblage des nappes longitudinale et transversale (les termes amont et aval sont utilisés ici en référence à la direction d'avance de la nappe bidimensionnelle en cours de formation).

La chambre 150 s'étend ainsi non seulement sur toute la longueur de la zone de nappage des fils 104 et sur la zone de dépôt de la nappe longitudinale 202, mais aussi sur au moins une partie de la zone d'assemblage. La chambre 150 est délimitée par des parois latérales adjacentes aux ailes de la couronne 130, une paroi de fond et des parois d'extrémité à ses extrémités amont et aval et s'ouvre à sa partie supérieure en regard de la paroi perforée 132 de la couronne 130.

De façon similaire, une chambre de dépression fixe 160 de forme annulaire s'étend entre les ailes de la couronne intérieure 140, sensiblement sur le même secteur annulaire que la chambre 150. La chambre 160 est délimitée par des parois latérales adjacentes aux ailes de la couronne 140, une paroi de fond et des parois d'extrémité amont et aval, et s'ouvre en regard de la paroi perforée 142 de la couronne 140.

Les chambres 150 et 160 sont reliées à une source de vide (non représentée) par des canalisations 152, 162 débouchant au fond des chambres.

Un peigne fixe de guidage 112 comprend un ensemble de lames 114 qui s'étendent radialement immédiatement au-dessus du plateau support 120 et des couronnes 130, 140. Du côté interne, les lames 114 formant les dents du peigne sont réunies par une barrette 116 solidaire d'un support fixe (non représenté).

En fonctionnement, lors du déplacement du cadre de guidage 106 vers la couronne interne 140, les fils transversaux 104 sont rapprochés les uns des autres par glissement sur le barreau courbe 108a tout en étant guidés par les faces latérales verticales des lames 114 du peigne 112. Lors du déplacement du cadre de guidage 106 vers la couronne externe 130, les fils transversaux sont écartés les uns des autres par glissement sur le barreau courbé 108b, en étant toujours guidés par les faces latérales verticales des lames 114 du peigne 112. Au niveau de leurs retournements, aux extrémités de la course du cadre de guidage 106, les fils transversaux sont maintenus par aspiration sur les couronnes rotatives 130, 140, de chaque côté des bords du plateau 120.

Dans l'exemple illustré, le guide 106 est déplacé immédiatement au-dessus du peigne 112. En variante, le guide 106 pourra être déplacé dans un espace ménagé entre le plateau support 120 et le peigne 112.

Le nappage des fils transversaux 104 étant réalisé avec avances continues synchronisées de la nappe transversale nappée 102, de la nappe hélicoïdale longitudinale 202 et des couronnes 130, 140, les fils transversaux 104 sont déposés selon des directions non radiales avec croisements des fils 104 entre eux et avec les fils longitudinaux 104 (figure 1).

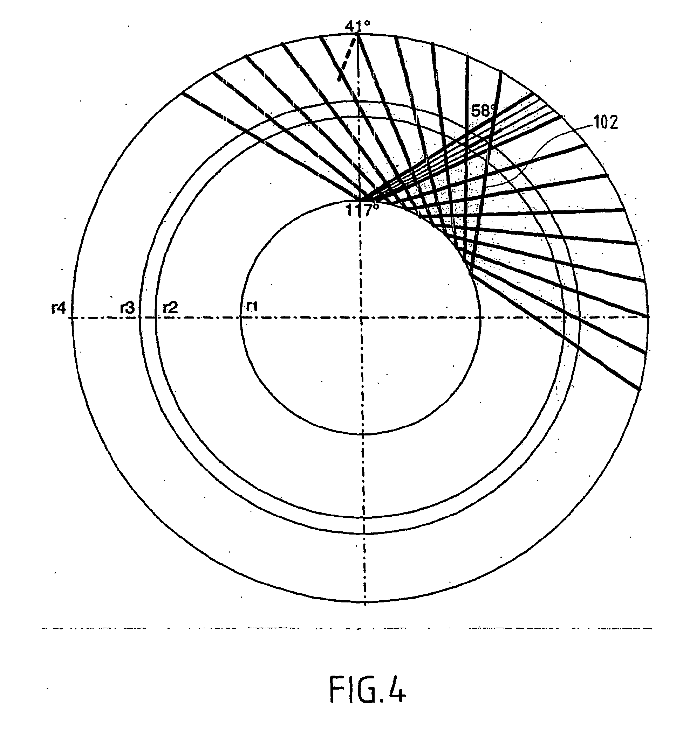

La figure 4 montre un exemple de nappage transversal de 10 fils. On constate que l'angle entre fils transversaux nappés varie en croissant entre le bord circonférentiel externe (rayon r₄) et le bord circonférentiel interne (rayon r₁) de la nappe. Le rayon r₂ est le rayon médian tandis que la ligne correspondant au rayon r₃ sépare la surface de la nappe annulaire en deux parties égales. Afin d'obtenir une nappe bidimensionnelle la moins hétérogène possible, il est avantageux de faire en sorte que les fils transversaux se croisent en formant un angle proche de ou approximativement égal à 60° au niveau de la circonférence de rayon r₃ pour avoir, à ce niveau une orientation de fils transversaux et longitudinaux à 3 x 60°. Cela peut être ajusté en réglant la vitesse d'avance de la nappe sur le plateau support 120 et la vitesse d'amenée des fils transversaux pour des dimensions de nappe hélicoïdale données. Dans l'exemple illustré, l'angle formé par les fils transversaux varie de 41° à 117° entre les circonférences externe et interne et est égal à 58° au niveau de la circonférence de rayon r₃.

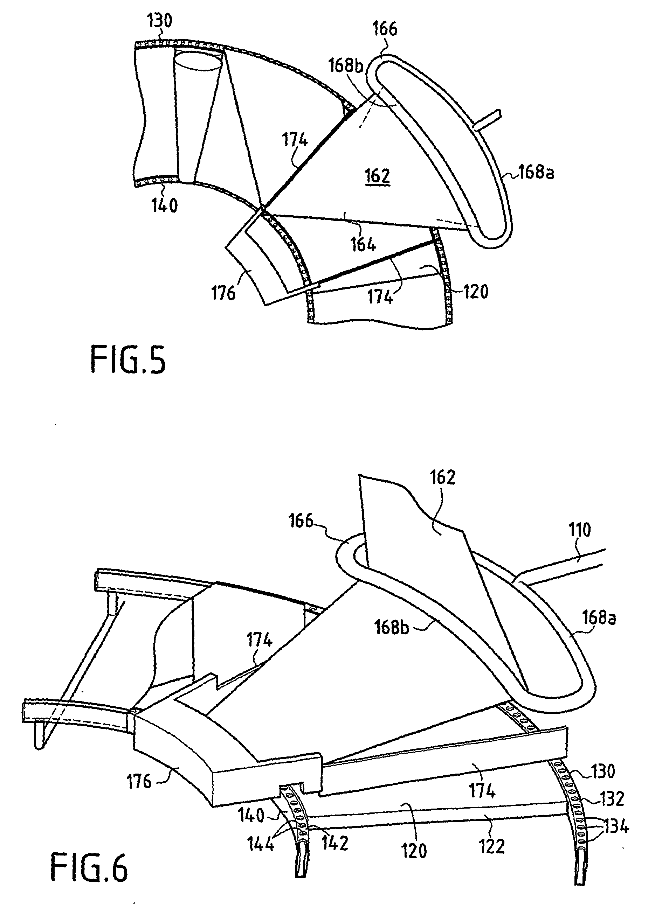

Les figures 5 et 6 illustrent une variante de réalisation d'une nappe transversale 162 par nappage d'un câble étalé 164. On peut utiliser à cet effet un câble de titre élevé, par exemple un câble en carbone de 300K, 320K ou 400K. L'étalement du câble peut être réalisé, de façon bien connue, par passage sur au moins un rouleau incurvé (ou rouleau "banane"), non représenté, l'étalement pouvant être assisté par exposition à un jet d'air, par exemple comme décrit dans le document PCT/FR02 02249. Il est possible de juxtaposer plusieurs câbles étalés pour avoir une nappe de plus grande largeur.

Le câble étalé 164 passe dans un cadre de guidage 166 analogue au cadre 106 décrit plus haut, avec deux barreaux incurvés 168a et 168b. Sur son trajet entre les couronnes externe 130 et interne 140, le câble 164 est en outre guidé entre deux lames radiales fixes 174 portées par une barrette 176 du côté interne.

Le cadre de guidage 166 est déplacé radialement dans un sens et dans l'autre. Sur son trajet radial vers l'intérieur, il contribue; grâce au barreau 168a et avec les lames de guidage fixes 174, à resserrer la nappe transversale 162 entre les couronnes 130 et 140 pour lui donner une forme de secteur d'anneau. Sur son trajet radial vers l'extérieur, le cadre de guidage 166 contribue, grâce au barreau 168b et aux lames 174, au ré-élargissement de la nappe transversale 162. La nappe transversale est maintenue au niveau de ses retournements par aspiration sur les couronnes 130, 140.

### Formation de la nappe longitudinale hélicoïdale

La nappe longitudinale hélicoïdale 202 comprend une pluralité de fils ou câbles longitudinaux (ou circonférentiels) 204 parallèles entre eux, tirés de bobines respectives portées par un cantre (non représenté). Dans la description qui suit, on désignera les éléments 204 par le terme fils, par souci de simplicité. La nappe longitudinale 202 s'étend sur une largeur sensiblement égale à celle de la nappe bidimensionnelle hélicoïdale à réaliser.

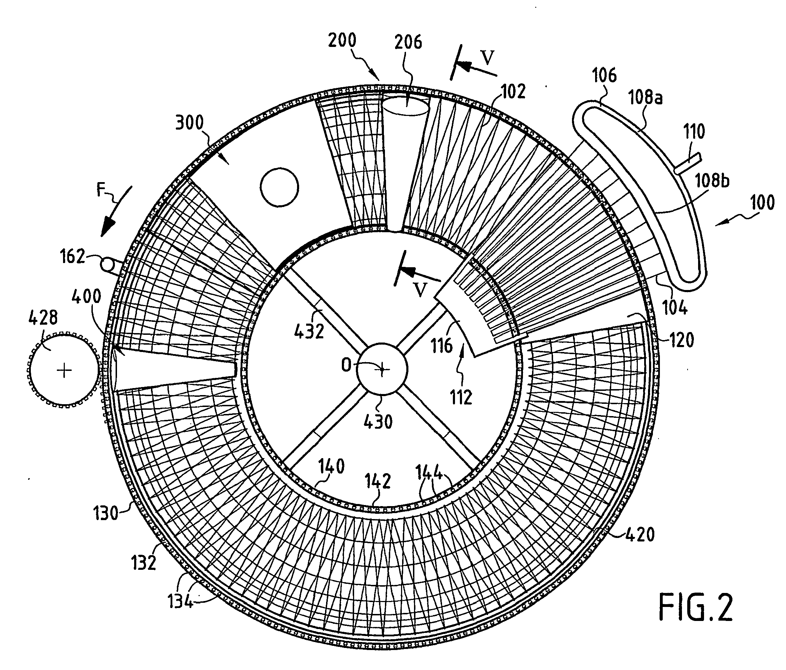

Selon un mode de réalisation (figures 1, 2 et 7), les fils longitudinaux 204 sont de même titre et sont disposés avec un espacement entre fils voisins qui décroît entre le bord longitudinal interne 202a de la nappe longitudinale (correspondant à la circonférence intérieure de la nappe bidimensionnelle hélicoïdale à réaliser) et le bord longitudinal externe opposé 202b. La variation de l'espacement entre fils de la nappe longitudinale est avantageusement déterminée pour obtenir, après assemblage avec la nappe transversale, une densité surfacique de la nappe bidimensionnelle hélicoïdale sensiblement constante sur la largeur de cette dernière.

Selon un autre mode de réalisation (figure 8), on utilise des fils longitudinaux 204' de titres différents disposés avec un espacement constant entre fils voisins. Le titre des fils varie en croissant entre les bords intérieur 202a et extérieur 202b de la nappe 202. La variation du titre est avantageusement déterminée pour obtenir, après assemblage avec les fils transversaux, une densité surfacique de la nappe bidimensionnelle hélicoïdale sensiblement constante sur la largeur de cette dernière.

On pourra bien entendu combiner variation de l'espacement entre fils longitudinaux et variation du titre de ceux-ci. Les fils 204 sont de nature semblable à celle des fils 104.

L'amenée des fils 204 (figures 1, 2 et 7) est réalisée au moyen d'une presse 206 formée de deux rouleaux coniques 208a, 208b appliqués l'un contre l'autre. L'un au moins des rouleaux 208a, 208b est entraîné en rotation pour appeler les fils 204. Les fils 204 passent successivement sur le rouleau supérieur 208a, entre celui-ci et le rouleau inférieur 208b, puis sur ce dernier. Les fils 204 sont délivrés par le rouleau inférieur 208b sur la nappe transversale nappée sur le plateau support horizontal 120.

Afin de conférer l'espacement voulu entre les fils 204 de la nappe 202, ceux-ci passent sur une barre de répartition 110 (figure 7) en amont de la presse 206. Chaque fil 204 passe sur la barre 110 dans un guide particulier, par exemple un orifice pratiqué à travers celle-ci, un intervalle entre deux pièces portées par la barre 110, ou encore une rainure formée sur la barre. D'autres moyens pourront être prévus pour régler l'espacement des fils 204, par exemple un peigne.

L'augmentation de densité surfacique de la nappe transversale 102 ou 162 entre le bord externe et le bord interne du plateau 120 est compensée par la variation de densité de la nappe longitudinale en direction radiale pour obtenir une nappe hélicoïdale bidimensionnelle de densité surfacique sensiblement uniforme.

### Assemblage des nappes longitudinale et transversale

L'ensemble déplacé en continu formé par la nappe transversale nappée et par la nappe longitudinale est amené au dispositif d'assemblage 300.

Dans l'exemple illustré (figures 1, 2, 9), le dispositif d'assemblage comprend une tête d'aiguilletage 302 de forme générale en secteur d'anneau qui s'étend entre les bords du plateau support 120, au-dessus de celui-ci. La tête 302 porte une pluralité d'aiguilles 304 réparties uniformément et est animée d'un mouvement vertical alternatif sous l'action d'un organe d'entraînement de type bielle-manivelle (non représenté). Le plateau support 120 présente des perforations 128 au droit des aiguilles 304 afin de permettre à celles-ci de pénétrer à travers le plateau support sans dommage.

Les aiguilles 304 traversent les nappes 202 et 102 (ou 162) et solidarisent celles-ci par entremêlement de filaments des fils 204 et 104 (ou des fils 204 et du câble 164).

On notera que la liaison de deux nappes fibreuses entre elles par aiguilletage est bien connue en soi.

L'aspiration des bords de la nappe transversale nappée sur les couronnes 130, 140 est maintenue jusqu'à ce que les nappes longitudinale et transversale soient suffisamment assemblées, par exemple au moins jusqu'à la moitié du secteur d'anneau occupé par la tête d'aiguilletage.

Le dépôt de la nappe longitudinale hélicoïdale 202 sur la nappe transversale nappée 102 est de préférence réalisé au plus près de l'extrémité amont du dispositif d'assemblage 300, c'est-à-dire immédiatement avant l'assemblage des nappes, afin d'éviter de possibles déplacements radiaux des fils 204 et donc de conserver les positions relatives de ceux-ci dans la nappe 202 puisqu'avant assemblage, les fils 204 ne sont pas maintenus.

On pourra toutefois, bien entendu, déposer d'abord la nappe longitudinale 202 et napper la nappe transversale 102 au-dessus de la nappe 202, sur le plateau 120.

Des modes d'assemblage des nappes longitudinale et transversale autres que l'aiguilletage peuvent être utilisés.

Ainsi, il est possible de réaliser un assemblage par couture avec un fil de liage. Le dispositif d'assemblage comprend alors une tête de couture disposée radialement, ou plusieurs têtes de couture espacées les unes des autres sur la largeur de la nappe longitudinale.

Il est possible également de disposer des fils thermofusibles sur la nappe transversale avant dépôt de la nappe longitudinale, le dispositif d'assemblage comprenant alors des moyens de chauffage des fils thermofusibles insérés entre les nappes.

### Evacuation de la nappe hélicoïdale bidimensionnelle

La nappe bidimensionnelle hélicoïdale 402 obtenue en sortie du dispositif d'assemblage est appelée par les rouleaux coniques 412a, 412b et enroulée en continu dans un pot annulaire 420 situé au-dessous du plateau support 120 et ayant même axe que celui-ci (figure 1).

Le plateau en forme de secteur d'anneau 120 a une extrémité aval 124 située entre le dispositif d'assemblage 300 et le dispositif d'appel 410. Son extrémité amont 122 est située de préférence en amont du dispositif 100 de nappage de la nappe 102.

Le pot annulaire 420 reçoit la nappe 402 qui y tombe par gravité en sortie du dispositif d'appel 410. La nappe 402 est enroulée dans le pot 420 en spires superposées à plat par rotation du pot 420 en synchronisme avec l'avance de la nappe 402 sur le plateau support 120.

A cet effet, le pot 420 peut être monté sur un plateau rotatif 422 mû par un rouleau ou pignon d'entraînement 424 monté sur un axe moteur vertical 426. Ce dernier peut porter un rouleau ou pignon 428 d'entraînement de la couronne externe 130. Le plateau 422 présente une tige axiale 430 reliée à la couronne interne 140 par des bras 432. Ainsi, le pot annulaire 420, la couronne externe 130 et la couronne interne 140 sont déplacés en rotation en synchronisme. La couronne externe 130 est supportée par des paliers (non représentés) sur lesquels les ailes verticales de la couronne prennent appui avec frottement ou roulement.

### Autres modes de réalisation

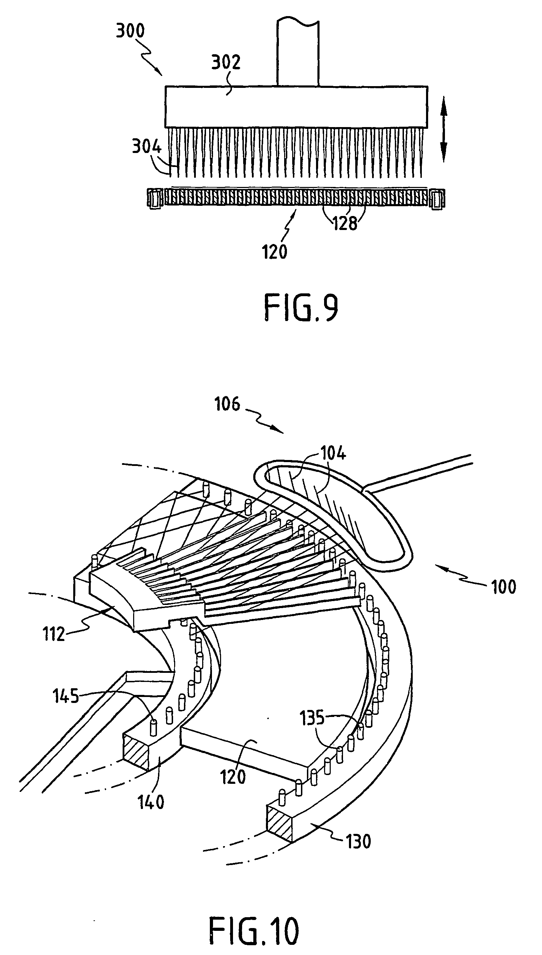

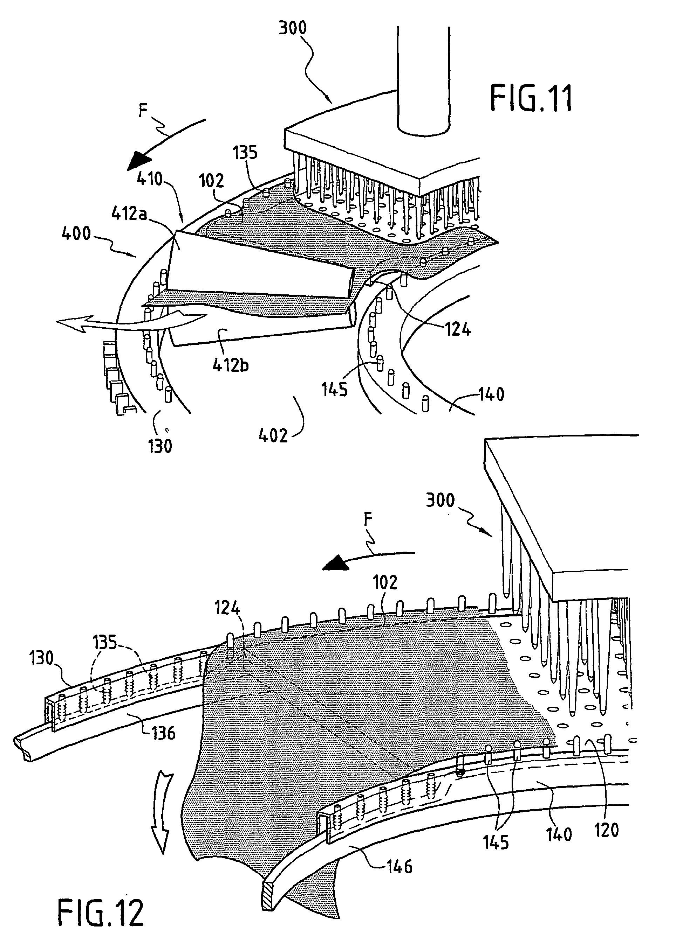

Les figures 10 et 11 illustrent un mode de réalisation qui se distingue notamment de celui des figures 1 à 3 et 7, 8 en ce que le maintien de la nappe transversale au niveau de ses retournements de part et d'autre du plateau support 120 est réalisé par passage autour de picots verticaux 135, 145 portés par les couronnes 130, 140 (figure 10).

Les couronnes sont alors formées de simples bandes annulaires sans perforations et sans association à des moyens d'aspiration.

En sortie du dispositif d'assemblage 300 (figure 11), la nappe bidimensionnelle hélicoïdale obtenue 402 est dégagée des picots 135, 145 en étant déplacée verticalement vers le haut. A cet effet, la ligne de tangente entre les rouleaux 412a, 412b du dispositif d'appel 410 est située au-dessus de l'extrémité supérieure des picots. Le dégagement de la nappe 402 pourra aussi être assisté en incurvant vers le haut la partie d'extrémité aval 124 du plateau support 120. La nappe 102 peut être recueillie dans un pot annulaire, comme dans le cas de la figure 1, avec de préférence guidage des bords de la nappe jusqu'au-dessous du plan des couronnes 130, 140, pour éviter une interférence avec les picots 135, 145 après dégagement hors de ceux-ci.

En variante (figure 12), on utilise des picots 135, 145 escamotables verticalement. Les picots traversent verticalement les couronnes 130, 140 et s'appuient à leur base sur les chemins de came fixes 136, 146. Les chemins de came 136, 146 sont conformés de manière à permettre un escamotage des picots vers le bas dès la sortie du dispositif d'assemblage 300 et un relevage des picots ou plus tard dès l'entrée amont du dispositif de nappage 100. Il n'est alors pas nécessaire de déplacer la nappe 402 vers le haut pour la dégager des picots en vue de son évacuation.

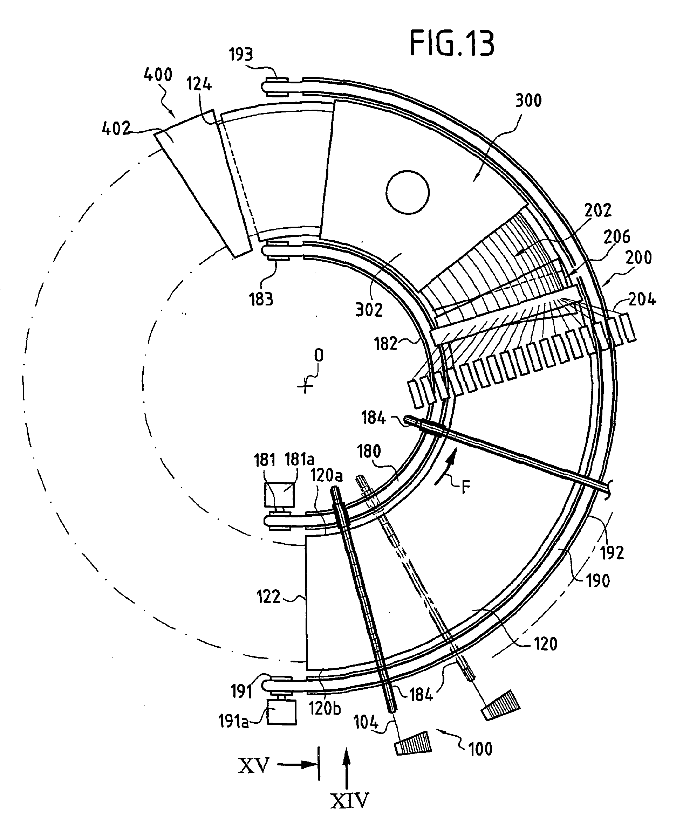

Les figures 13 à 16 illustrent un autre mode de réalisation qui se distingue notamment de celui des figures 1 à 3 au niveau du nappage de la nappe transversale et de l'entraînement de la nappe transversale nappée.

Chaque fil transversal 104 formant la nappe 102 passe dans un guide-fil 280 tel qu'un oeillet déplacé suivant un mouvement de va-et-vient en direction radiale entre les bords intérieur 120a et extérieur 120b du plateau support 120. Chaque guide-fil 280 est solidaire d'un support 282 guidé le long d'une tige radiale horizontale 284. Le support 282 est par exemple solidaire d'un câble 286 qui suit un trajet sans fin entre les extrémités de la tige 284 en passant sur une poulie motrice 288 et une poulie de renvoi 290. La poulie 288 est entraînée alternativement dans un sens et dans l'autre au moyen d'un moteur (non représenté). D'autres moyens d'entraînement du support 282 peuvent être prévus, par exemple des tiges de vérins.

Sur les figures, seuls certains des fils transversaux et de leurs moyens d'amenée associés sont représentés par souci de clarté du dessin.

Chaque fil transversal 104 est maintenu de part et d'autre du plateau 120 par appui sur des courroies respectives 180, 190. Les courroies 180, 190 sont guidées dans des glissières horizontales 182, 192 qui s'étendent le long et à l'extérieur des bords 120a, 120b du plateau support 120. Chaque glissière 182, 192 présente dans son fond une ou plusieurs fentes ou une pluralité de perçages raccordés par des raccords 184 avec des conduites 186, 196 reliées à une source de vide (non représentée). Les conduites 186, 196 s'étendent sous les dispositifs 100 et 200 d'amenée des nappes transversale et longitudinale, ainsi que sous une partie au moins du dispositif d'assemblage 300.

Les courroies 180, 190 sont des courroies sans fin qui suivent un trajet horizontal dans les glissières 182, 192 entre les extrémités amont 122 et aval 124 du plateau support 120.

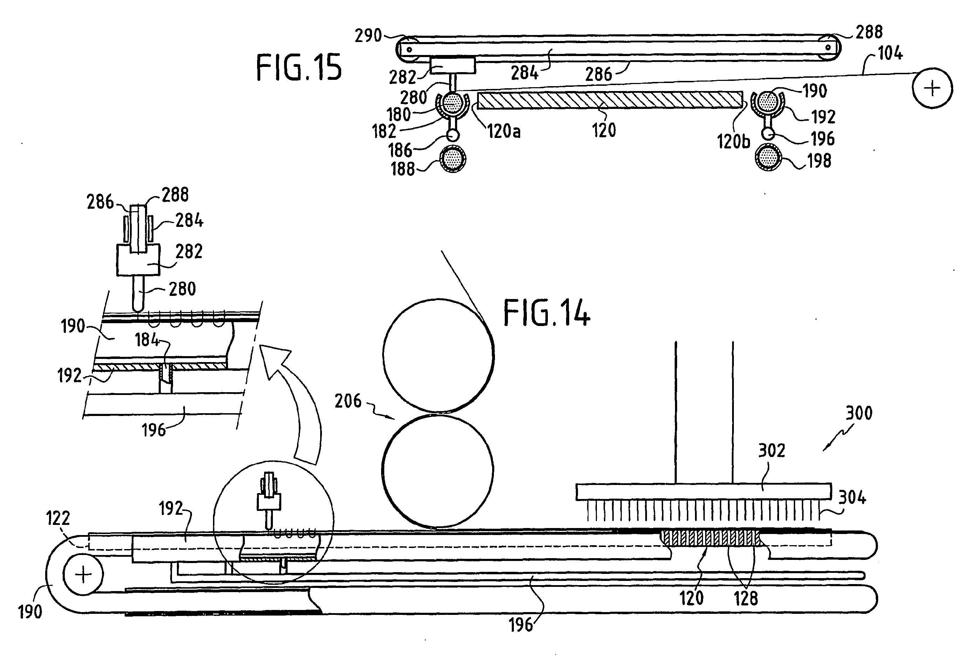

La courroie 180 passe sur des roues 181, 183 d'entraînement et de renvoi situées en amont et en aval des extrémités 122, 124 du plateau support 120, sous le plan de celui-ci. La courroie 180 est guidée par une glissière horizontale incurvée 188 (figure 15) sur son trajet de retour entre les roues 181 et 183 en passant au-dessous de la conduite 186. De façon similaire, la courroie 190 passe sur une roue d'entraînement 191 et une roue de renvoi 193 situées en amont et en aval des extrémités 122, 124 du plateau support 120, sous le plan de celui-ci. La courroie 190 est guidée par une glissière horizontale incurvée 198 sur son trajet de retour entre ses roues d'entraînement et de renvoi, en passant au-dessous de la conduite 196.

Les roues d'entraînement 181, 191 sont couplées à des moteurs 181a 191a afin de déplacer les courroies 180, 190 dans les glissières 182, 192 en synchronisme avec les fils déplacés sur le plateau support 120. On notera que les glissières inférieures 188, 198 sont disposées sensiblement parallèlement et à la verticale des glissières supérieures 182, 192. Ainsi, sous l'effet conjugué de l'avance des courroies 180, 190 et de l'entraînement des guide-fils 280, chaque fil transversal 104 suit un trajet en ligne brisée entre les brins supérieurs des courroies 180, 190 en étant, au niveau de chaque retournement, maintenu appliqué sur les courroies 180, 190 par la dépression établie dans les glissières 182, 192.

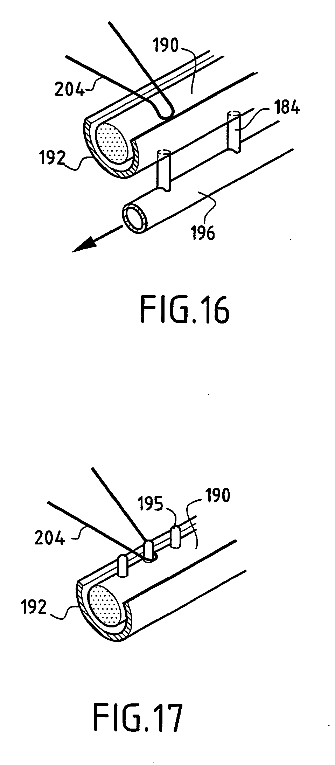

Selon une variante de réalisation (figure 17), le maintien de chaque fil transversal 104 de chaque côté du plateau support 120 peut être assuré au moyen de picots, tels que 195, portés par les courroies 180, 190. A chaque extrémité de sa course, chaque guide-fil 280 est guidé jusqu'à un point de rebroussement situé un peu au-delà de la courroie, de sorte que, par l'avance de la courroie, le fil transversal fait le tour d'un picot porté par celle-ci. Chaque fil transversal est donc maintenu par les picots sans nécessiter d'aspiration, de sorte que les glissières 182, 192 sont dépourvues de fentes ou perçages et qu'une source de vide n'est pas nécessaire.

Dans ce qui précède, on a envisagé l'utilisation d'un plateau support fixe en forme de secteur d'anneau à surface lisse.

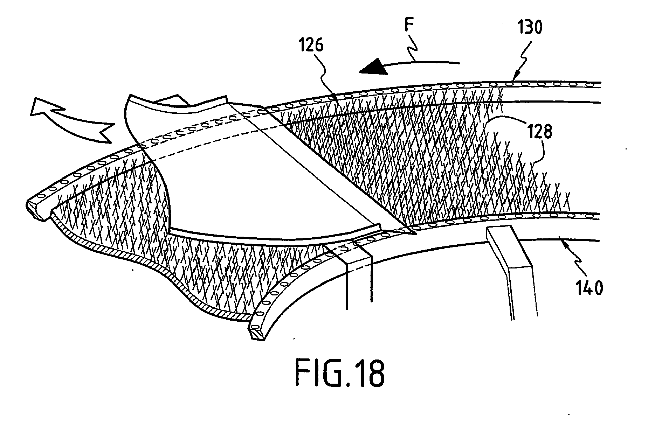

En variante, on pourra utiliser un plateau support rotatif 126 dont la partie supérieure forme une brosse avec des poils rigides 128, comme montré sur la figure 18, les dispositifs 100, 200 et 300 de nappage de nappe transversale, de dépôt de nappe longitudinale circonférentielle et d'assemblage de ces deux nappes étant par exemple tels que décrits en référence aux figures 1 à 3 et 7, 8.

Le plateau 126 forme un anneau complet entraîné en rotation avec les couronnes 130, 140, par exemple en étant solidaire de celles-ci. Les poils rigides 128 assurent un maintien efficace des fils longitudinaux 204, de sorte que la nappe longitudinale pourra être déposée sur le plateau support 126 avant la nappe transversale sous crainte d'un déplacement radial des fils longitudinaux avant assemblage des nappes. En outre, les poils rigides 128 permettent la pénétration des aiguilles, lorsque l'assemblage des nappes est réalisé par aiguilletage, sans endommagement du support rotatif.

En sortie du dispositif d'assemblage 300, la nappe bidimensionnelle hélicoïdale 402 est dégagée du plateau support 126 vers le haut et est évacuée latéralement par rapport au plateau support en étant reprise par des rouleaux coniques (non représentés).

On notera que les couronnes 130 et 140 pourront être omises si les poils rigides 128 du plateau 126 permettent d'assurer un maintien efficace des fils 104 de la nappe transversale après nappage. Ce peut être le cas lorsque le nappage radial des fils 104 s'accompagne d'un déplacement vertical, à chaque extrémité de course radiale, pour engager les fils 104 dans les poils rigides 128 de la brosse formant la partie supérieure du plateau 126.

On notera aussi qu'un dégagement latéral de la nappe bidimensionnelle hélicoïdale formée peut aussi être envisagé dans les autres modes de réalisation décrits (figures 1 - 16) au lieu du recueil de la nappe dans un pot annulaire inférieur. Le plateau support fixe 120 dans ces autres modes de réalisation pourra alors former un anneau complet.

## Revendications

1. Procédé de réalisation d'une nappe fibreuse bidimensionnelle hélicoïdale, **caractérisé en ce qu'**il comprend les étapes qui consistent à :
- amener au moins une nappe fibreuse transversale (102) et la napper en la guidant suivant une direction sensiblement radiale, le long d'un trajet alternativement dans un sens et dans l'autre entre les bords circonférentiels externe et interne de la nappe, avec retournement de la nappe transversale (202) à chaque extrémité de son trajet, la largeur de la nappe transversale étant diminuée entre le bord circonférentiel externe et le bord circonférentiel interne,
- maintenir la nappe transversale au fur et à mesure de son nappage,
- appeler une pluralité de fils ou câbles (204) sensiblement parallèles entre eux pour former une nappe longitudinale hélicoïdale (202), la densité surfacique de la nappe longitudinale étant décroissante entre son bord longitudinal externe et son bord longitudinal interne,
- superposer les nappes transversale et longitudinale hélicoïdale et les avancer en continu en rotation à plat,
- assembler la nappe transversale nappée et la nappe longitudinale pour former une nappe bidimensionnelle hélicoïdale (402), et
- évacuer la nappe bidimensionnelle hélicoïdale ainsi formée.

2. Procédé selon la revendication 1, **caractérisé en ce que** la nappe longitudinale (202) est amenée sur la nappe transversale nappée (102) immédiatement avant assemblage.

3. Procédé selon l'une quelconque des revendications 1 et 2, **caractérisé en ce que** la nappe transversale est formée d'une pluralité de fils ou câbles (104).

4. Procédé selon l'une quelconque des revendications 1 et 2, **caractérisé en ce que** la nappe transversale est formée d'au moins un câble étalé (164).

5. Procédé selon l'une quelconque des revendications 1 à 4, **caractérisé en ce que**, lors de son nappage, la nappe transversale est guidée par passage sur un guide (106 ; 166) de manière à favoriser un resserrement de la nappe lors du déplacement du guide du bord externe vers le bord interne de la nappe, et inversement.

6. Procédé selon la revendication 5, **caractérisé en ce que** le guide comporte deux barreaux incurvés (108a, 108b ; 168a 168b) sur lesquels la nappe transversale s'appuie alternativement lorsque le guide est déplacé dans un sens et dans l'autre entre les bords externe et interne de la nappe.

7. Procédé selon les revendications 3 et 5, **caractérisé en ce que** chaque fil ou câble (104) est en outre guidé entre des éléments de guidage fixes (114) s'étendant sensiblement radialement entre les bords circonférentiels externe et interne de la nappe.

8. Procédé selon les revendications 4 et 5, **caractérisé en ce que** le ou les câbles étalés (164) sont en outre guidés entre deux éléments de guidage fixes (174) s'étendant sensiblement radialement entre les bords circonférentiels externe et interne de la nappe.

9. Procédé selon la revendication 3, **caractérisé en ce que** chaque fil ou câble de la nappe transversale est guidé par passage dans un guide-fil respectif (280) déplacé entre les bords circonférentiels externe et interne de la nappe.

10. Procédé selon l'une quelconque des revendications 1 à 9, **caractérisé en ce que** la nappe transversale est maintenue après nappage au niveau de ses retournements sur des supports (130, 140 ; 180, 190) situés le long des bords externe et interne de la nappe, lesquels supports étant déplacés en synchronisme avec l'avance des nappes transversale nappée et longitudinale.

11. Procédé selon la revendication 10, **caractérisé en ce que** le maintien est assuré par aspiration sur lesdits supports.

12. Procédé selon la revendication 10, **caractérisé en ce que** le maintien est assuré par passage autour de picots (135, 145 ; 195) portés par lesdits supports.

13. Procédé selon l'une quelconque des revendications 1 à 12, **caractérisé en ce que** la variation de la densité surfacique de la nappe longitudinale (202) est réalisée en utilisant des fils ou câbles de titres différents et/ou en faisant varier l'espacement entre les fils ou câbles.

14. Procédé selon l'une quelconque des revendications 1 à 13, **caractérisé en ce que** l'appel des fils ou câbles longitudinaux (204) est réalisé en faisant passer ceux-ci dans une presse (206) comprenant deux rouleaux coniques appliqués l'un vers l'autre.

15. Procédé selon l'une quelconque des revendications 1 à 14, **caractérisé en ce que** les nappes longitudinale et transversale nappée sont assemblées par aiguilletage.

16. Procédé selon l'une quelconque des revendications 1 à 14, **caractérisé en ce que** les nappes longitudinale et transversale nappée sont assemblées par couture avec un fil de liage.

17. Procédé selon l'une quelconque des revendications 1 à 14, **caractérisé en ce que** les nappes longitudinale et transversale nappée sont assemblées par interposition de fils thermofusibles.

18. Procédé selon l'une quelconque des revendications 1 à 17, **caractérisé en ce que** les nappes transversale et longitudinale sont amenées sur un plateau support annulaire fixe (120).

19. Procédé selon la revendication 18, **caractérisé en ce que** le plateau support (120) a une forme de secteur d'anneau avec une extrémité aval (124), située en aval d'une zone d'assemblage (300) des nappes longitudinale et transversale, dans le sens d'avance, et la nappe bidimensionnelle hélicoïdale (402) est évacuée à la sortie du plateau support annulaire située à l'extrémité aval de celui-ci.

20. Procédé selon la revendication 19, **caractérisé en ce que** la nappe bidimensionnelle hélicoïdale est enroulée en hélice en spires superposées à plat dans un pot de stockage annulaire rotatif (420) situé sous le plateau support annulaire (120) et ayant sensiblement même axe que celui-ci.

21. Procédé selon l'une quelconque des revendications 1 à 17, **caractérisé en ce que** les nappes transversale et longitudinale sont amenées sur un plateau support annulaire rotatif (126).

22. Procédé selon l'une quelconque des revendications 1 à 19 et 21, **caractérisé en ce que** la nappe bidimensionnelle hélicoïdale est évacuée latéralement par rapport au plateau support annulaire.

23. Installation de fabrication d'une nappe fibreuse bidimensionnelle hélicoïdale comportant :
- un plateau support annulaire (120),
- un dispositif (100) d'amenée et de nappage transversal pour déplacer une nappe fibreuse transversale suivant un trajet alternatif d'un côté à l'autre du plateau support annulaire avec retournement de la nappe transversale à chaque extrémité de ce trajet et en guidant la nappe en direction sensiblement radiale,
- des moyens de maintien de la nappe transversale nappée,
- un dispositif (200) d'appel d'un ensemble de fils ou câbles (204) pour former une nappe longitudinale hélicoïdale (202) et l'amener sur le plateau support annulaire,
- un dispositif (300) d'assemblage de la nappe transversale nappée et de la nappe longitudinale pour former une nappe bidimensionnelle hélicoïdale,
- des moyens (400) d'avance en continu de la nappe transversale nappée et de la nappe longitudinale en rotation à plat sur le plateau support annulaire, et
- des moyens d'évacuation de la nappe bidimensionnelle hélicoïdale après assemblage des nappes longitudinale et transversale.

24. Installation selon la revendication 23, **caractérisée en ce que** le dispositif d'amenée et de nappage de la nappe transversale comprend un guide (106 ; 166) sur lequel passe la nappe transversale et des moyens d'entraînement du guide en déplacement le long d'un trajet alternatif sensiblement radial d'un côté à l'autre du plateau support annulaire, le guide étant réalisé de manière à favoriser un resserrement de la nappe transversale lors du déplacement du guide du côté extérieur du plateau annulaire vers le côté intérieur, et inversement.

25. Installation selon la revendication 24, **caractérisé en ce que** le guide (106 ; 166) comprend deux barreaux incurvés (108a, 108b ; 168a, 168b) sur lesquels la nappe transversale s'appuie alternativement lorsque le guide est déplacé dans un sens et dans l'autre entre les côtés extérieur et intérieur du plateau annulaire.

26. Installation selon la revendication 24, **caractérisée en ce que**, pour amener et napper une nappe transversale formée d'une pluralité de fils ou câbles transversaux (104), le dispositif d'amenée et de nappage comprend en outre une pluralité d'éléments de guidage fixes (114) disposés radialement entre les côtés extérieur et intérieur du plateau annulaire (120) et coopérant avec les fils ou câbles transversaux pour guider chacun de ceux-ci sur son trajet entre le côté extérieur et le côté intérieur du plateau support annulaire.

27. Installation selon la revendication 24, **caractérisée en ce que**, pour amener et napper une nappe transversale formée d'au moins un câble étalé (164), le dispositif d'amenée et de nappage comprend en outre deux éléments de guidage fixes (174) disposés radialement entre les côtés extérieur et intérieur du plateau support annulaire et entre lesquels la nappe transversale est guidée sur son trajet entre le côté extérieur et le côté intérieur du plateau support annulaire.

28. Installation selon la revendication 23, **caractérisée en ce que**, pour amener et napper une nappe transversale formée d'une pluralité de fils ou câbles transversaux, le dispositif d'amenée et de nappage comprend une pluralité de guide-fils (280) chacun associé à un fil ou câble transversal respectif, et des moyens de déplacement alternatif des guide-fils le long des trajets sensiblement radiaux entre les côtés extérieur et intérieur du plateau support annulaire (120).

29. Installation selon l'une quelconque des revendications 23 à 28, **caractérisée en ce que** les moyens de maintien de la nappe transversale nappée comportent des supports en forme de bandes ou couronnes (130, 140 ; 180, 190) situés de part et d'autre du plateau support annulaire (120), des moyens de retenue de la nappe transversale au niveau de ses retournements sur lesdits supports, et des moyens d'entraînement desdits supports en synchronisme avec les moyens d'avance.

30. Installation selon la revendication 29, **caractérisée en ce que** les moyens de retenue comportent une chambre de dépression associée aux supports en forme de bandes ou couronnes afin de maintenir la nappe transversale sur ceux-ci par aspiration.

31. Installation selon la revendication 29, **caractérisée en ce que** les moyens de retenue comportent des picots (135, 145 ; 195) portés par des supports en forme de bande, de manière à réaliser les retournements de la nappe transversale autour des picots.

32. Installation selon l'une quelconque des revendications 23 à 31, **caractérisée en ce que** le dispositif d'appel de la nappe longitudinale comprend une presse (206) formée de deux rouleaux coniques entre lesquels passent les fils ou câbles (204) formant la nappe longitudinale.

33. Installation selon l'une quelconque des revendications 23 à 32, **caractérisée en ce que** le dispositif (300) d'assemblage des nappes longitudinale et transversale nappée est un dispositif d'aiguilletage qui comprend au moins une tête d'aiguilletage (302) et s'étend sur un secteur d'anneau au-dessus du plateau support annulaire (120).

34. Installation selon la revendication 33, **caractérisé en ce que** le support annulaire est fixe et est muni de perforations (128) en regard des aiguilles (304) du dispositif d'aiguilletage.

35. Installation selon l'une quelconque des revendications 23 à 32, **caractérisée en ce que** le dispositif d'assemblage des nappes longitudinale et transversale nappée comprend au moins une tête de couture pour assembler les nappes au moyen d'un fil de liage.

36. Installation selon l'une quelconque des revendications 23 à 35, **caractérisée en ce que** les moyens d'avance comportent des moyens d'entraînement (410) de la nappe bidimensionnelle hélicoïdale (402) en aval du dispositif d'assemblage (300), dans le sens de l'avance.

37. Installation selon l'une quelconque des revendications 23 à 36, **caractérisée en ce que** le plateau support annulaire (120) est fixe et s'étend sur un secteur d'anneau ayant une extrémité aval (124), dans le sens de l'avance des nappes longitudinale et transversale nappée, située en aval du dispositif (300) d'assemblage des nappes.

38. Installation selon la revendication 37, **caractérisée en ce que** les moyens d'évacuation de la nappe bidimensionnelle hélicoïdale (402) comportent un pot annulaire (420) situé sous le plateau support annulaire (120) et sensiblement de même axe que celui-ci, et des moyens d'entraînement du pot annulaire en synchronisme avec les moyens d'avance, pour recueillir et enrouler en continu dans le pot la nappe bidimensionnelle hélicoïdale sortant du plateau support annulaire à l'extrémité aval de celui-ci.

39. Installation selon l'une quelconque des revendications 23 à 33, **caractérisée en ce que** le plateau support annulaire (126) est rotatif.

40. Installation selon la revendication 39, **caractérisée en ce que** le plateau support annulaire (126) a une partie supérieure formant brosse à poils rigides (128).

## Claims

1. A method of making a helical two-dimensional fiber sheet, the method being **characterized in that** it comprises the following steps:
bringing at least one transverse fiber sheet (102) and lapping it while guiding it in a substantially radial direction along a path in alternating directions between inner and outer circumferential edges of the sheet, with the transverse sheet (202) being reversed at each end of its path, the width of the transverse sheet being narrowed between the outer circumferential edge and the inner circumferential edge;
• holding the transverse sheet as it is lapped;
• pulling a plurality of substantially mutually parallel yarns or tows (204) to form a helical longitudinal sheet (202) with the density per unit area of the longitudinal sheet decreasing from its longitudinally outer edge to its longitudinally inner edge;
• superposing the helical longitudinal and transverse sheets and advancing them flat in continuous rotation;
• assembling together the lapped transverse sheet and the longitudinal sheet to form a helical two-dimensional sheet (402); and
• removing the helical two-dimensional sheet formed in this way.

2. A method according to claim 1, **characterized in that** the longitudinal sheet (202) is brought onto the lapped transverse sheet (102) immediately prior to the sheet being assembled together.

3. A method according to claim 1 or claim 2, **characterized in that** the transverse sheet is formed by a plurality of yarns or tows (104).

4. A method according to claim 1 or claim 2, **characterized in that** the transverse sheet is formed by at least one spread tow (164).

5. A method according to any one of claims 1 to 4, **characterized in that** while the transverse sheet is being lapped it is guided by passing over a guide (106; 166) so as to encourage narrowing of the sheet while the guide is moving from the outer edge towards the inner edge of the sheet, and vice versa.

6. A method according to claim 5, **characterized in that** the guide comprises two curved bars (108a, 108b; 168a, 168b) against which the transverse sheet bears in alternation while the guide is being moved in one direction and in the opposite direction between the outer and inner edges of the sheet.

7. A method according to claims 3 and 5, **characterized in that** each yarn or tow (104) is also guided between fixed guide elements (114) extending substantially radially between the outer and inner circumferential edges of the sheet.

8. A method according to claims 4 and 5, **characterized in that** the spread tow(s) (164) are also guided between two stationary guide elements (174) extending substantially radially between the outer and inner circumferential edges of the sheet.

9. A method according to claim 3, **characterized in that** each yarn or tow of the transverse sheet is guided by passing through a respective yarn guide (280) that is moved between the outer and inner circumferential edges of the sheet.

10. A method according to any one of claims 1 to 9, **characterized in that**, after lapping, the transverse sheet is held, where it reverses, on supports (130, 140; 180, 190) situated along the outer and inner edges of the sheet, which supports are moved synchronously with the advance of the lapped transverse sheet and of the longitudinal sheet.

11. A method according to claim 10, **characterized in that** holding is provided by being sucked onto said supports.

12. A method according to claim 10, **characterized in that** holding is provided by passing around pegs (135, 145; 195) carried by said supports.

13. A method according to any one of claims 1 to 12, **characterized in that** the density per unit area of the longitudinal sheet (202) is varied by using yarns or tows of different weights and/or by varying the spacing between the yarns or tows.

14. A method according to any one of claims 1 to 13, **characterized in that** the longitudinal yarns or tows (204) are pulled by passing them through a press (206) comprising two conical rollers pressing against each other.

15. A method according to any one of claims 1 to 14, **characterized in that** the longitudinal sheet and the lapped transverse sheet are assembled together by needling.

16. A method according to any one of claims 1 to 14, **characterized in that** the longitudinal sheet and the lapped transverse sheet are assembled together by stitching using a bonding yarn.

17. A method according to any one of claims 1 to 14, **characterized in that** the longitudinal sheet and the lapped transverse sheet are assembled together by interposing hot-melt yarns.

18. A method according to any one of claims 1 to 17, **characterized in that** the transverse sheet and the longitudinal sheet are fed onto a stationary annular support plate (120).

19. A method according to claim 18, **characterized in that** the support plate (120) is in the form of a annular sector, having a downstream end (124) situated downstream in the advance direction from an assembly zone (300) in which the longitudinal and transverse sheets are assembled together, and the helical two-dimensional sheet (402) is removed at an outlet from the annular support plate situated at its downstream end.

20. A method according to claim 19, **characterized in that** the helical two-dimensional sheet is wound helically as flat superposed turns in a rotary annular storage drum (420) situated beneath the annular support plate (120) and having substantially the same axis as the support plate.

21. A method according to any one of claims 1 to 17, **characterized in that** the transverse and longitudinal sheets are fed onto a rotary annular support plate (126).

22. A method according to any one of claims 1 to 19, and 21, **characterized in that** the helical two-dimensional sheet is removed laterally from the annular support plate.

23. An installation for fabricating a helical two-dimensional fiber sheet, the installation comprising:
• an annular support plate (120);
• a feed and transverse lapping device (100) for moving a fiber sheet transversely along a back-and-forth path from one side to the other of the annular support plate with the transverse sheet being reversed at each end of the path and with the sheet being guided in a substantially radial direction;
• means for holding the lapped transverse sheet;
• a device (200) for pulling a set of yarns or tows (204) to form a helical longitudinal sheet (202) and for feeding it onto the annular support plate;
• a device (300) for assembling together the lapped transverse sheet and the longitudinal sheet to form a helical two-dimensional sheet;
• means (400) for continuously advancing the lapped transverse sheet and the longitudinal sheet in flat rotation on the annular support plate; and
• means for removing the helical two-dimensional sheet after the longitudinal and transverse sheets have been assembled together.

24. An installation according to claim 23, **characterized in that** the device for feeding and lapping the transverse sheet comprises a guide (106; 166) over which the transverse sheet passes, and means for driving the guide in reciprocating motion along a substantially radial path between the sides of the annular support plate, the guide being made in such a manner as to encourage narrowing of the transverse sheet while the guide is moving from the outside of the annular plate towards the inside, and vice versa.

25. An installation according to claim 24, **characterized in that** the guide (106; 166) comprises two curved bars (108a, 108b; 168a, 168b) against which the transverse sheet bears in alternation when the guide is moved in one direction and in the other direction between the outer and inner sides of the annular plate.

26. An installation according to claim 24, **characterized in that** in order to feed and lap a transverse sheet formed by a plurality of transverse yarns or tows (104), the feeding and lapping device further comprises a plurality of stationary guide elements (14) disposed radially between the outer and inner sides of the annular plate (120) and co-operating with the transverse yarns or tows to guide each of them on its path between the outer side and the inner side of the annular support plate.

27. An installation according to claim 24, **characterized in that** in order to feed and lap a transverse sheet formed by at least one spread tow (164), the feeding and lapping device further comprises two stationary guide elements (174) disposed radially between the outer and inner sides of the annular support plate, and between which the transverse sheet is guided on its path between the outer side and the inner side of the annular support plate.

28. An installation according to claim 23, **characterized in that** in order to feed and lap a transverse sheet formed by a plurality of transverse yarns or tows, the feeding and lapping device comprises a plurality of yarn guides (280) each associated with a respective transverse yarn or tow, and means for displacing the yarn guides back and forth along substantially radial paths between the outer and inner sides of the annular support plate (120).

29. An installation according to any one of claims 23 to 28, **characterized in that** the means for holding the lapped transverse sheet comprise supports in the form of bands or rings (130, 140; 180, 190) situated on either side of the annular support plate (120), holding means for holding the transverse sheet on said support where the sheet reverses, and means for driving said supports synchronously with the advance means.

30. An installation according to claim 29, **characterized in that** the holding means comprise a suction chamber associated with the supports in the form of bands or rings in order to hold the transverse sheet thereagainst by suction.

31. An installation according to claim 29, **characterized in that** the holding means comprise pegs (135, 145; 195) carried by supports in the form of bands, so as to enable the transverse sheet to be reversed around the pegs.

32. An installation according to any one of claims 23 to 31, **characterized in that** the device for pulling the longitudinal sheet comprises a press (206) formed by two conical rollers with the yarns or tows (204) forming the longitudinal sheet passing between them.

33. An installation according to any one of claims 23 to 32, **characterized in that** the device (300) for assembling together the longitudinal sheet and the lapped transverse sheet is a needling device comprising at least one needling head (302) and extending over an annular sector above the annular support plate (120).

34. An installation according to claim 33, **characterized in that** the annular support is stationary and is provided with perforations (128) in register with the needles (304) of the needling device.

35. An installation according to any one of claims 23 to 32, **characterized in that** the device for assembling the longitudinal sheet and the lapped transverse sheet together comprise at least one stitching head for assembling the sheets together by means of a bonding yarn.

36. An installation according to any one of claims 23 to 35, **characterized in that** the advance means comprise drive means (410) for driving the helical two-dimensional sheet (402) in the advance direction, the drive means being located downstream from the assembly device (300).

37. An installation according to any one of claims 23 to 36, **characterized in that** the annular support plate (120) is stationary and extends over an annular sector having a downstream end (124) in the advance direction of the longitudinal sheet and the lapped transverse sheet, said downstream end being situated downstream from the device (300) for assembling the sheets together.

38. An installation according to claim 37, **characterized in that** the means for removing the helical two-dimensional sheet (402) comprise an annular drum (420) situated beneath the annular support plate (120) and having substantially the same axis as the support plate, and means for driving the annular drum synchronously with the advance means so that the helical two-dimensional sheet leaving the annular support plate from its downstream end is continuously collected and wound in the drum.

39. An installation according to any one of claims 23 to 33, **characterized in that** the annular support plate (126) is a rotary plate.

40. An installation according to claim 39, **characterized in that** the annular support plate (126) has a top portion forming a brush with rigid bristles (128).

## Patentansprüche

1. Verfahren zur Herstellung eines zweidimensionalen spiralförmigen Faservlieses, **dadurch gekennzeichnet, daß** es die Schritte umfaßt, die darin bestehen:
- wenigstens ein Querfaservlies (102) zuzuführen und dieses **dadurch** zu legen, daß es in einer im wesentlichen radialen Richtung entlang eines Weges hin und her in die eine und in die andere Richtung zwischen dem äußeren und dem inneren Umfangsrand des Vlieses geführt wird, mit einem Umkehren des Quervlieses (102) an jedem Ende seines Weges, wobei die Breite des Quervlieses zwischen dem äußeren Umfangsrand und dem inneren Umfangsrand verringert ist,
- das Quervlies seinem Legen entsprechend zu halten,
- eine Vielzahl von im wesentlichen parallel zueinander verlaufenden Fäden oder Seilen (204) zuzuführen, um ein spiralförmiges Längsvlies (202) zu bilden, wobei die Flächendichte des Längsvlieses zwischen seinem äußeren Längsrand und seinem inneren Längsrand abnehmend ist,
- das Quervlies und das spiralförmige Längsvlies aufeinanderzulegen und sie flachliegend kontinuierlich drehend vorwärtszubewegen,
- das gelegte Quervlies und das Längsvlies zu verbinden, um ein zweidimensionales spiralförmiges Vlies (402) zu bilden, und
- das so gebildete zweidimensionale spiralförmige Vlies auszutragen.

2. Verfahren nach Anspruch 1, **dadurch gekennzeichnet, daß** das Längsvlies (202) unmittelbar vor dem Verbinden auf das gelegte Quervlies (102) geführt wird.

3. Verfahren nach einem der Ansprüche 1 und 2, **dadurch gekennzeichnet, daß** das Quervlies von einer Vielzahl von Fäden oder Seilen (104) gebildet ist.

4. Verfahren nach einem der Ansprüche 1 und 2, **dadurch gekennzeichnet, daß** das Quervlies von wenigstens einem ausgebreiteten Seil (164) gebildet ist.

5. Verfahren nach einem der Ansprüche 1 bis 4, **dadurch gekennzeichnet, daß** das Quervlies während seines Legens **dadurch** geführt wird, daß es über eine Führung (106; 166) läuft, um bei Bewegen der Führung vom Außenrand zum Innenrand des Vlieses ein Verengen des Vlieses zu begünstigen und umgekehrt.

6. Verfahren nach Anspruch 5, **dadurch gekennzeichnet, daß** die Führung zwei gekrümmte Stäbe (108a, 108b; 168a, 168b) umfaßt, an denen sich das Quervlies abwechselnd abstützt, wenn die Führung in die eine und in die andere Richtung zwischen dem Außen- und dem Innenrand des Vlieses bewegt wird.

7. Verfahren nach den Ansprüchen 3 und 5, **dadurch gekennzeichnet, daß** jeder Faden oder jedes Seil (104) ferner zwischen festen Führungselementen (114), die sich im wesentlichen radial zwischen dem äußeren und dem inneren Umfangsrand des Vlieses erstrecken, geführt wird.

8. Verfahren nach den Ansprüchen 4 und 5, **dadurch gekennzeichnet, daß** das oder die ausgebreitete(n) Seil(e) (164) ferner zwischen zwei festen Führungselementen (174), die sich im wesentlichen radial zwischen dem äußeren und dem inneren Umfangsrand des Vlieses erstrecken, geführt werden.

9. Verfahren nach Anspruch 3, **dadurch gekennzeichnet, daß** jeder Faden oder jedes Seil des Quervlieses **dadurch** geführt wird, daß er bzw. es in einem jeweiligen zwischen dem äußeren und dem inneren Umfangsrand des Vlieses bewegten Fadenführer (280) läuft.

10. Verfahren nach einem der Ansprüche 1 bis 9, **dadurch gekennzeichnet, daß** das Quervlies nach dem Legen im Bereich seines Umkehrens an Haltern (130, 140; 180, 190) gehalten ist, die entlang des äußeren und des inneren Randes des Vlieses angeordnet sind, wobei die Halter mit dem Vorschub des gelegten Quervlieses und des Längsvlieses synchron bewegt werden.

11. Verfahren nach Anspruch 10, **dadurch gekennzeichnet, daß** das Halten durch Ansaugen an die Halter sichergestellt wird.

12. Verfahren nach Anspruch 10, **dadurch gekennzeichnet, daß** das Halten durch Verlaufen um von den Haltern getragenen Stiften (135, 145; 195) sichergestellt wird.

13. Verfahren nach einem der Ansprüche 1 bis 12, **dadurch gekennzeichnet, daß** die Änderung der Flächendichte des Längsvlieses (202) durch Verwendung von Fäden oder Seilen mit unterschiedlichen Titern und/oder durch Variieren des Abstandes zwischen den Fäden oder Seilen erfolgt.

14. Verfahren nach einem der Ansprüche 1 bis 13, **dadurch gekennzeichnet, daß** das Zuführen der Längsfäden oder -seile (204) **dadurch** vollzogen wird, daß man diese in eine Presse (206) mit zwei aneinandergelegten konischen Walzen laufen läßt.

15. Verfahren nach einem der Ansprüche 1 bis 14, **dadurch gekennzeichnet, daß** das Längsvlies und das gelegte Quervlies durch Vernadeln verbunden werden.

16. Verfahren nach einem der Ansprüche 1 bis 14, **dadurch gekennzeichnet, daß** das Längsvlies und das gelegte Quervlies durch Nähen mit einem Bindefaden verbunden werden.

17. Verfahren nach einem der Ansprüche 1 bis 14, **dadurch gekennzeichnet, daß** das Längsvlies und das gelegte Quervlies durch Einfügen warmschmelzbarer Fäden verbunden werden.

18. Verfahren nach einem der Ansprüche 1 bis 17, **dadurch gekennzeichnet, daß** die Quer- und Längsvliese auf eine feste, ringförmige Tragplatte (120) geführt werden.

19. Verfahren nach Anspruch 18, **dadurch gekennzeichnet, daß** die Tragplatte (120) die Form eines Ringsektors mit einem stromabwärtigen Ende (124), das in Vorschubrichtung hinter einem Verbindungsbereich (300) der Längs- und Quervliese liegt, aufweist und daß das zweidimensionale spiralförmige Vlies (402) am Ausgang der ringförmigen Tragplatte, welcher an ihrem stromabwärtigen Ende liegt, ausgetragen wird.

20. Verfahren nach Anspruch 19, **dadurch gekennzeichnet, daß** das zweidimensionale spiralförmige Vlies spiralförmig in flach übereinander liegenden Windungen in einem rotierenden ringförmigen Lagertopf (420) aufgewickelt wird, der sich unter der ringförmigen Tragplatte (120) befindet und im wesentlichen die gleiche Achse wie diese aufweist.

21. Verfahren nach einem der Ansprüche 1 bis 17, **dadurch gekennzeichnet, daß** die Quer- und Längsvliese auf eine rotierende ringförmige Tragplatte (126) geführt werden.

22. Verfahren nach einem der Ansprüche 1 bis 19 und 21, **dadurch gekennzeichnet, daß** das zweidimensionale spiralförmige Vlies seitlich zur ringförmigen Tragplatte ausgetragen wird.

23. Einrichtung zur Herstellung eines zweidimensionalen spiralförmigen Faservlieses, umfassend:
- eine ringförmige Tragplatte (120),
- eine Vorrichtung (100) zum Zuführen und Querlegen, um ein Querfaservlies entlang eines Hin- und Herweges von einer Seite zur anderen der ringförmigen Tragplatte, mit Umkehren des Quervlieses an jedem Ende dieses Weges und durch Führen des Vlieses in im wesentlichen radialer Richtung, zu bewegen,
- Mittel zum Halten des gelegten Quervlieses,
- eine Vorrichtung (200) zum Zuführen einer Menge von Fäden oder Seilen (204), um ein spiralförmiges Längsvlies (202) zu bilden und um dieses auf die ringförmige Tragplatte zu führen,
- eine Vorrichtung (300) zum Verbinden des gelegten Quervlieses und des Längsvlieses, um ein zweidimensionales spiralförmiges Vlies zu bilden,
- Mittel (400), um das gelegte Quervlies und das Längsvlies flach auf der ringförmigen Tragplatte liegend kontinuierlich rotierend vorwärts zu bewegen, sowie
- Mittel zum Austragen des zweidimensionalen spiralförmigen Vlieses nach dem Verbinden der Längs- und Quervliese.

24. Einrichtung nach Anspruch 23, **dadurch gekennzeichnet, daß** die Vorrichtung zum Zuführen und Legen des Quervlieses eine Führung (106; 166), über die das Quervlies läuft, sowie Mittel umfaßt, um die Führung sich entlang eines im wesentlichen radialen Hin- und Herweges von einer Seite zur anderen der ringförmigen Tragplatte bewegend anzutreiben, wobei die Führung derart ausgebildet ist, daß sie bei Bewegen der Führung von der Außenseite der ringförmigen Platte zur Innenseite ein Verengen des Quervlieses begünstigt und umgekehrt.

25. Einrichtung nach Anspruch 24, **dadurch gekennzeichnet, daß** die Führung (106; 166) zwei gekrümmte Stäbe (108a, 108b; 168a, 168b) umfaßt, an denen sich das Quervlies abwechselnd abstützt, wenn die Führung in die eine und in die andere Richtung zwischen der Außen- und der Innenseite der ringförmigen Platte bewegt wird.

26. Einrichtung nach Anspruch 24, **dadurch gekennzeichnet, daß** - um ein von einer Vielzahl von Querfäden oder -seilen (104) gebildetes Quervlies zuzuführen und zu legen - die Zuführ- und Legevorrichtung ferner eine Vielzahl von festen Führungselementen (114) aufweist, die radial zwischen der Außenseite und der Innenseite der ringförmigen Platte (120) angeordnet sind und mit den Querfäden oder -seilen zusammenwirken, um einen jeden bzw. ein jedes von ihnen über seinen Weg zwischen der Außenseite und der Innenseite der ringförmigen Tragplatte zu führen.

27. Einrichtung nach Anspruch 24, **dadurch gekennzeichnet, daß** - um ein von wenigstens einem ausgebreiteten Seil (164) gebildetes Quervlies zuzuführen und zu legen - die Zuführ- und Legevorrichtung ferner zwei feste Führungselemente (174) umfaßt, die radial zwischen der Außenseite und der Innenseite der ringförmigen Tragplatte angeordnet sind und zwischen denen das Quervlies über seinen Weg zwischen der Außenseite und der Innenseite der ringförmigen Tragplatte geführt wird.

28. Einrichtung nach Anspruch 23, **dadurch gekennzeichnet, daß** - um ein von einer Vielzahl von Querfäden oder -seilen gebildetes Quervlies zuzuführen und zu legen - die Zuführ- und Legevorrichtung eine Vielzahl von Fadenführern (280), die jeweils einem jeweiligen Querfaden oder -seil zugeordnet sind, sowie Mittel zum Hin- und Herbewegen der Fadenführer entlang der im wesentlichen radialen Wege zwischen der Außenseite und der Innenseite der ringförmigen Tragplatte (120) umfaßt.

29. Einrichtung nach einem der Ansprüche 23 bis 28, **dadurch gekennzeichnet, daß** die Mittel zum Halten des gelegten Quervlieses streifen- oder kranzförmige Halter (130, 140; 180, 190), die auf beiden Seiten der ringförmigen Tragplatte (120) angeordnet sind, Mittel zum Halten des Quervlieses im Bereich seines Umkehrens an den Haltern sowie Mittel für den Synchronantrieb der Halter mit den Vorschubmitteln umfassen.

30. Einrichtung nach Anspruch 29, **dadurch gekennzeichnet, daß** die Haltemittel eine den streifen- oder kranzförmigen Haltern zugeordnete Unterdruckkammer umfassen, um das Quervlies durch Ansaugen an diesen zu halten.

31. Einrichtung nach Anspruch 29, **dadurch gekennzeichnet, daß** die Haltemittel von streifenförmigen Haltern getragene Stifte (135, 145; 195) umfassen, um das Umkehren des Quervlieses um die Stifte zu vollziehen.

32. Einrichtung nach einem der Ansprüche 23 bis 31, **dadurch gekennzeichnet, daß** die Vorrichtung zum Zuführen des Längsvlieses eine Presse (206) umfaßt, die von zwei konischen Walzen gebildet ist, zwischen denen die das Längsvlies bildenden Fäden oder Seile (204) hindurch laufen.

33. Einrichtung nach einem der Ansprüche 23 bis 32, **dadurch gekennzeichnet, daß** die Vorrichtung (300) zum Verbinden des Längsvlieses und des gelegten Quervlieses eine Nadelungsvorrichtung ist, die wenigstens einen Nadelungskopf (302) umfaßt und sich über einen Ringsektor oberhalb der ringförmigen Tragplatte (120) erstreckt.

34. Einrichtung nach Anspruch 33, **dadurch gekennzeichnet, daß** der ringförmige Halter fest ist und mit den Nadeln (304) der Nadelungsvorrichtung gegenüberliegenden Perforierungen (128) versehen ist.

35. Einrichtung nach einem der Ansprüche 23 bis 32, **dadurch gekennzeichnet, daß** die Vorrichtung zum Verbinden des Längsvlieses und des gelegten Quervlieses wenigstens einen Nähkopf umfaßt, um die Vliese mittels eines Bindefadens zu verbinden.

36. Einrichtung nach einem der Ansprüche 23 bis 35, **dadurch gekennzeichnet, daß** die Vorschubmittel Mittel zum Antreiben (410) des zweidimensionalen spiralförmigen Vlieses (402), die sich in Vorschubrichtung hinter der Verbindungsvorrichtung (300) befinden, umfassen.

37. Einrichtung nach einem der Ansprüche 23 bis 36, **dadurch gekennzeichnet, daß** die ringförmige Tragplatte (120) fest ist und sich über einen Ringsektor erstreckt, der ein stromabwärtiges Ende (124) aufweist, das in Vorschubrichtung des Längsvlieses und des gelegten Quervlieses hinter der Vorrichtung (300) zum Verbinden der Vliese liegt.

38. Einrichtung nach Anspruch 37, **dadurch gekennzeichnet, daß** die Mittel zum Austragen des zweidimensionalen spiralförmigen Vlieses (402) einen ringförmigen Topf (420), der unter der ringförmigen Tragplatte (120) gelegen ist und im wesentlichen die gleiche Achse wie diese aufweist, sowie Mittel für den Synchronantrieb des ringförmigen Topfes mit den Vorschubmitteln umfassen, um das zweidimensionale spiralförmige Vlies, das an dem stromabwärtigen Ende der ringförmigen Tragplatte von dieser abläuft, in dem Topf aufzufangen und aufzuwickeln.

39. Einrichtung nach einem der Ansprüche 23 bis 33, **dadurch gekennzeichnet, daß** sich die ringförmige Tragplatte (126) dreht.

40. Einrichtung nach Anspruch 39, **dadurch gekennzeichnet, daß** die ringförmige Tragplatte (126) einen eine Bürste mit starren Borsten (128) bildenden oberen Teil aufweist.
